# EUROPEAN PATENT SPECIFICATION

(11) **EP 2 469 145 B1**
(45) Date of publication and mention of the grant of the patent: **30.04.2014**
(21) Application number: 11006181.9
(22) Date of filing: 27.07.2011
(51) Int. Cl.: F16L 37/091

(54) **Adaptor and pipe connector using the same**
Adapter und Rohrverbinder, der diesen Adapter verwendet
Adaptateur et connecteur de tuyau l'utilisant

(30) Priority: 23.12.2010 CN 201010601861
(43) Date of publication of application: 27.06.2012
(73) Proprietor: La casa angela holding limited, Hongkong (CN)
(72) Inventor: Salehi-Bakhtiari, Manouchehr, Guangdong 510335 (CN)
(74) Representative: Thum, Bernhard

(56) References cited:
- EP-A1- 0 542 003
- EP-A1- 1 067 324
- EP-A2- 1 036 970
- EP-B1- 1 178 255
- DE-A1- 19 702 289
- DE-A1- 19 934 093
- FR-A1- 2 932 871
- GB-A- 2 469 640

## Description

### BACKGROUND OF THE INVENTION

Field of the Invention

This invention relates to a pipe connector, in particular relates to an adaptor and a pipe connector using the same.

Description of the Related Art

A pipe is one of essential facilities used in the industry, and a pipe connecting device, such as a socket, is an important device for connecting different pipes.

Nowadays, well known means of connecting pipes includes threaded connection (referring to metallic pipes) thermal welded joint (PP-R Pipe and PE pipe). Threaded connection of pipes is realized by screwing two pipes together via the internal thread of one of the pipes and the external thread of the other, and using Teflon belt for sealing, and thermal welded joint is realized by melting the joints of two pipe and connecting them together in molten state, so that the joint forms a sealed connection. However, the two above mentioned means of connection are very complex, and with bad quality of sealing, in addition, such means of connection may also bring inconvenience to the maintenance.

In order to meet different needs, improved ways of connecting pipes and the related devices are being expected.

Currently, more and more pipes multi-layer pipes with some poisonous metals such as aluminum are used for conveying water, in order to improve its strength. People usually cut off the multi-layer pipe in order to obtain a suitable length for installation. However, after the multi-layer pipe is cut off, the metal such as aluminum in the PEX pipe may be exposed. If the multi-layer pipe is used for drinking water, and the water contacts with the health risky metals, it may threaten people's health. Therefore, it is prohibited to use this kind of pipe for conveying drinking water.

The above mentioned prior arts may give the opportunity for drinking water to contact the health risky metals exposed from at least one of the ends of the adaptor, after the multi-layer pipe is inserted and the socket is injected with drinking water. It is because there is no component in the socket for blocking the end of pipe inserted from the water.

GB 2 469 640 A discloses an assembly comprising a connector according to the preamble of claim 1, a collet having multiple resilient prongs for clamping down on the outside surface of a pipe, an O-ring for ensuring a seal between the outside diameter of the pipe and an inside diameter of the connector, and a pipe stiffener. The pipe stiffener has a head provided with a groove for receiving an O-ring and a stem having a groove located towards its free end for receiving an O-ring.

EP 1 178 255 B1 discloses a tube coupling comprising a hollow main body, a tube, an O-ring seal which the tube engages in a sealing manner, a stop surface for preventing the O-ring seal from moving axially towards the centre of the coupling, and a tubular body. The tubular body comprises a channel arranged to receive an O-ring seal and a channel for housing an O-ring seal.

FR 2 932 871 A1 discloses an assembly comprising a fitting part, a plastic pipe, a seal ring, and a cylindrical part. The cylindrical part comprises a groove housing an O-ring and an outer flange forming a shoulder for an O-ring.

EP 1 067 324 A1 discloses a connector comprising a connecting body, a tube, an O-ring, a cannula, a shoulder to stop the cannula and a shoulder intended to allow the positioning of the assembly formed by the O-ring, a spacer, a fastening sleeve and a ring. The cannula comprises a housing in which an O-ring is placed and a recess intended to receive an O-ring.

### SUMMARY OF THE INVENTION

In view of the above-described problem, it is one object of the invention to provide an adaptor with improved sealing, which may block the end of pipe inserted from the water injected, so that the water passing through the socket will not threaten people's health due to the fact that it contacts with the poisonous metal at such end. To achieve the above objectives, in accordance with one embodiment of the invention provided is a pipe connector using an adaptor comprising: a socket body having pipe locking assembly for locking the pipe inserted in the socket in the direction of pipe entry; a third O-shaped sealing ring for or forming a sealed connection with the external wall of said pipe; a O-shaped sealing ring stop shoulder; a pipe sealing segment; and an adaptor having an adaptor body, a socket connecting segment, a pipe connecting segment, a first O-shaped sealing ring and a second O-shaped sealing ring; wherein said O-shaped sealing ring stop shoulder is disposed on the internal wall of said socket body, for stopping said third O- shaped sealing ring from moving in the direction of pipe entry; said an axial passage is disposed in said adaptor body; said first O-shaped sealing ring is arraged disposed on said socket connecting segment for forming a sealed connection with the internal wall of said socket; and said second O-shaped sealing ring is arraged disposed on said pipe connecting segment for forming a sealed connection with the internal wall of said pipe.

The pipe connector, a first positioning structure is circumferentially disposed on the external wall of the socket connecting segment for positioning the first O-shaped sealing ring; a second positioning structure is circumferentially disposed on the external wall of the pipe connecting segment for positioning the second O-shaped sealing ring.

The pipe connector, the first positioning structure is a first groove that is circumferentially disposed, while the second positioning structure is a second groove that is circumferentially disposed; the first O-shaped sealing ring is disposed in the first groove, while the second O-shaped sealing ring is disposed in the second groove.

The pipe connector, wherein, an adaptor flange is circumferentially disposed on the external wall of the socket connecting segment, and the first groove is circumferentially disposed on the adaptor flange; a pipe stopping member is disposed on the internal wall of the socket body, for stopping the adaptor from moving in the direction of pipe entry.

The pipe connector, the first groove comprises a pipe connecting segment side forming a first wall, and a socket connecting segment side forming a second wall; the first wall and the second wall are annular, and the diameter of the first wall is larger than that of the second wall; the pipe stop member is a pipe stop member with a annular shape that is circumferentially disposed; the internal diameter of the pipe stop member is larger than that of the second wall, but smaller than that of the first wall; the first O-shaped sealing ring is in sealed connection with the internal wall of the pipe stop member; the first wall works with the pipe stop member to prevent the pipe from moving in the direction of entry.

The pipe connector, the pipe locking assembly comprises a locking cap for preventing the components in the pipe connector from escaping , a locking cap stop member disposed at the end of the socket body where the pipe enters, for preventing the locking cap from escaping; a demounting ring for unlocking the pipe; a grab ring, comprising a flange and a plurality of teeth disposed on the flange and fixed to the external wall of the pipe; a retainer, in moveable connection with the internal wall of the socket body, for stopping the grab ring from moving in the direction of pipe entry; a retainer stop shoulder disposed on the internal wall of the socket body for stopping the retainer from moving in the direction of pipe entry.

The pipe connector, wherein, the socket body comprises-an O-shaped sealing ring location and a step; the O-shaped sealing ring location is disposed between the O-shaped sealing ring stop shoulder and retainer stop shoulder; thestep is in sealed connection with the O-shaped sealing ring location; thestep is disposed at the end of theO-shaped sealing ring stop shoulder; theO-shaped sealing ring stop shoulder is close to to the third O-shaped sealing ring; and thestep always keeps in sealed connection with the O-shaped sealing ring location.

The pipe connector, wherein, said socket further comprises: a locking cap stop shoulder, a convex part, and the demounting ring having a sharp angle; the locking cap stop shoulder is disposed on the internal wall of the socket body, between the grab ring and the locking cap, for stopping the locking cap from moving in the direction of pipe entry; the convex part is disposed on the external wall of the demounting ring for working with the locking cap to avoid the demounting ring of escaping from the socket; the sharp angle disposed at the end of the demount ring is close to the grab ring; the gap between the O-shaped sealing ring stop shoulder and the retainer is no narrower than the axial width of the third O-shaped sealing ring that is compressed when the pipe passes through the third O-shaped sealing ring; the internal diameter of the teeth in their initial state is smaller than the external diameter of the pipe; the internal diameter of the third O-shaped sealing ring is smaller than the external diameter of the pipe; the internal diameter of the demounting ring is larger than the external diameter of the pipe; the retainer is annular; and the taper having a ramp that coordinates with the teeth.

Advantages of the invention comprise:

1. The first O-shaped sealing ring is disposed on the socket connecting segment for forming a sealed connection with the internal wall of the pipe connector; the second O-shaped sealing ring is disposed on the pipe connecting segment for forming a sealed connection with the internal wall of the pipe. The adaptor with this design can ensure the liquid (drinking water) never flows in from any end of the adaptor to contact the metal exposed at the end of pipe, so that it may avoid the fact that people's health may be threatened by the liquid (drinking water) after contacting with the metal at the end of pipe. In addition, the first O-shaped sealing ring disposed circumferentially on the external wall of the adaptor, may not only ensure that the O-shaped sealing ring always contacts with the internal wall of pipe connector, even if there is a slight relative movement between the adaptor and the internal wall of pipe connector; but also increases the pressure on the internal wall of pipe connector, so as to increases the friction between the adaptor and such internal wall, thereby improve the tightness of the system. In addition, the adaptor mentioned above allows no need to use another type of pipe without health risk substance such as aluminum at the end, when conveying drinking water, so as to reduce the cost of carrying 2 types of pipes.

2. The first positioning structure is circumferentially disposed on the external wall of the socket connecting segment for positioning the first O-shaped sealing ring; a second positioning structure is circumferentially disposed on the external wall of the pipe connecting segment for positioning the second O-shaped sealing ring. The adaptor with this design not only ensure no relative movement between the second O-shaped sealing ring and the adaptor, so as to ensure the quality of sealing between the pipe and the adaptor, but also ensure no axially relative movement between the first O-shaped sealing ring and the adaptor, so as to keep the first O-shaped sealing ring always staying on the external wall of the adaptor, thereby ensuring the sealing between the adaptor and the internal wall of pipe connector.

3. The first positioning structure is a first groove that is circumferentially disposed, while the second positioning structure is a second groove that is circumferentially disposed; the first O-shaped sealing ring is disposed in the first groove, while the second O-shaped sealing ring is disposed in the second groove; wherein, the groove used to be the positioning structure can be easily formed, and also can ensure the quality of sealing of system.

4. The adaptor flange is circumferentially disposed on the external wall of the socket connecting segment, and the first groove is circumferentially disposed on the adaptor flange. The adaptor with this design may block the pipe from moving in the direction of pipe entry, and also may keep the pipe in correct position of being sealed internally.

5. The first groove comprises a pipe connecting segment side forming a first wall, and a socket connecting segment side forming a second wall; the first wall and the second wall are annular, and the diameter of the first wall is larger than that of the second wall; the first wall works with the pipe connector to prevent the pipe from moving in the direction of entry. The adaptor with this design can allow a step structure formed by the first wall, the second wall and the O-shaped sealing ring disposed in the first groove, so that it can improve the compactness between the adaptor and the pipe stopping component disposed on the internal wall of pipe connector.

6. A pipe connector comprising: a socket body comprising in the direction of pipe entry: pipe locking assembly for locking the pipe inserted in the pipe connector; a third O-shaped sealing ring for or forming a sealed connection with the external wall of the pipe ; a pipe sealing segment; wherein, further configuring an adaptor; the adaptor comprises an adaptor body with a axial passage in it, which also comprises a socket connecting segment for connecting with a pipe connector, and a pipe connecting segment for connecting with a pipe; wherein, a first O-shaped sealing ring is disposed on the socket connecting segment for forming a sealed connection with the internal wall of the pipe connector; a second O-shaped sealing ring is disposed on the pipe connecting segment for forming a sealed connection with the internal wall of the pipe. The pipe connector also comprises the above mentioned adaptor. The pipe connector with this design can ensure the liquid (drinking water) never flows in from any end of the adaptor to contact the metal exposed at the end of pipe, so that it may avoid the fact that people's health may be threatened by the liquid (drinking water) after contacting with the metal at the end of pipe. In addition, the first O-shaped sealing ring disposed circumferentially on the external wall of the adaptor, may not only ensure that the O-shaped sealing ring always contacts with the internal wall of pipe connector, even if there is a slight relative movement between the adaptor and the internal wall of pipe connector; but also increases the pressure on the internal wall of pipe connector, so as to increases the friction between the adaptor and such internal wall, thereby improve the tightness of the system.

7. The pipe connector comprises an adaptor, wherein the first positioning structure is circumferentially disposed on the external wall of the socket connecting segment for positioning the first O-shaped sealing ring; and the second positioning structure is circumferentially disposed on the external wall of the pipe connecting segment for positioning the second O-shaped sealing ring. The pipe connector with this design not only ensure no relative movement between the second O-shaped sealing ring and the adaptor, so as to ensure the quality of sealing between the pipe and the adaptor, but also ensure no axially relative movement between the first O-shaped sealing ring and the adaptor, so as to keep the first O-shaped sealing ring always staying on the external wall of the adaptor, thereby ensuring the sealing between the adaptor and the internal wall of pipe connector.

8.The pipe connector, wherein, the adaptor flange is circumferentially disposed on the external wall of the socket connecting segment, and the first groove is circumferentially disposed on the adaptor flange; the pipe stop member is disposed on the internal wall of the socket body, for stopping the adaptor from moving in the direction of pipe entry; the pipe connector with this design may the adaptor and the pipe locked between the pipe stop member and the pipe locking assembly, so as to improve the tightness of the system.

9. The pipe connector, wherein, comprises an O-shaped sealing ring location disposed between the O-shaped sealing ring stop shoulder and the retainer stop shoulder, a step which is in sealed connection with the O-shaped sealing ring location, is disposed at the end of the O-shaped sealing ring stop shoulder close to the third O-shaped sealing ring; wherein, the a step keeps in sealed connection with the O-shaped sealing ring location. This design may improve the sealing between the third O-shaped sealing ring and the internal wall of pipe connector, so as to ensure the sealing of system

10. If the gap between the O-shaped sealing ring stop shoulder and the retainer is as wide as the axial width of the O-shaped sealing ring that is compressed when the pipe enters the pipe connector, the pressure generated by the third O-shaped sealing ring is not so large, and this may ease the insertion of pipe.

11. As the internal diameter of the teeth in their initial state is smaller than the external diameter of the pipe, the teeth of the grab ring can grab on the external wall of the pipe. As the internal diameter of the O-shaped sealing ring is smaller than the external diameter of the pipe, the O-shaped sealing ring can form a sealed connection with the external wall of the pipe, and as the internal diameter of the demounting ring is larger than the external diameter of the pipe, a sufficient clearance forms between the demounting ring and the pipe allowing an unrestricted entry of the pipe.

12. The retainer is annular, and contains a ramp that coordinates with the teeth. This allows the teeth of the grab ring to flex when pushed by the pipe being inserted. The demounting ring containing a sharp angle at the end of the demount ring close to the O-shaped sealing ring ensures least contact with the teeth of the grab ring.

### BRIEF DESCRIPTION OF THE DRAWINGS

Detailed description will be given below in conjunction with accompanying drawings:

FIG. 1 illustrates the adaptor with a adaptor flange;

FIG.2 illustrates the adaptor with the first wall and the second wall;

FIG.3 illustrates the adaptor in Fig.1 connected with pipe in working status;

FIG.4 illustrates the working status of the adaptor in Fig.2 connected with pipe;

FIG.**5** illustrates the pipe connector without the adaptor installed;

FIG.6 illustrates the pipe connector with the first wall and the second wall in working status.

In the drawings, the following reference numbers are used:

1-socket body, 2-third O-shaped sealing ring, 3-retainer, 4-grab ring, 5-locking cap, 6-demounting ring, 7-O-shaped sealing ring stop shoulder, 8-retainer stop shoulder, 9- locking cap stop member, 10-tooth, 11-pipe stop member, 12-grab ring flange, 13-pipe, 14-O-shaped sealing ring location, 15-step, 16-convex part, 17-locking cap stop shoulder; 101-adaptor body, 102-passage, 103-first groove, 104-second groove, 105-first O-shaped sealing ring, 106-second O-shaped sealing ring, 107-adaptor flange, 108-first wall, 109-second wall, 110-socket connecting segment, 111-pipe connecting segment, 120-pipe sealing segment;

### DETAILED DESCRIPTION OF THE EMBODIMENTS

### Example 1

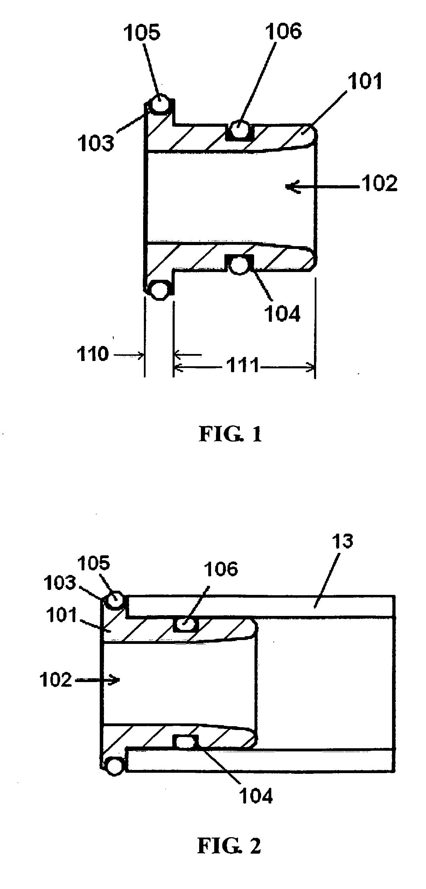

Referring to FIG.1, the adaptor comprises an adaptor body 101 with a axial passage 102 in it, which also comprises a socket connecting segment 110 for connecting with a pipe connector, and a pipe connecting segment 111 for connecting with a pipe; an adaptor flange 107 is circumferentially disposed on the external wall of the socket connecting segment 110.

Referring to FIG.2, a first O-shaped sealing ring 105 is disposed on the socket connecting segment 110 for forming a sealed connection with the internal wall of the pipe connector; a second O-shaped sealing ring 106 is disposed on the pipe connecting segment 111 for forming a sealed connection with the internal wall of the pipe.

A first positioning structure is circumferentially disposed on the external wall of the socket connecting segment 110 for positioning the first O-shaped sealing ring 105; a second positioning structure is circumferentially disposed on the external wall of the pipe connecting segment 111 for positioning the second O-shaped sealing ring 106.

The first positioning structure is a first groove 103 that is circumferentially disposed on the adaptor flange 107, while the second positioning structure is a second groove 104 that is circumferentially disposed on the external wall of the adaptor body 101; the first O-shaped sealing ring 105 is disposed in the first groove 103, while the second O-shaped sealing ring 106 is disposed in the second groove 104.

The adaptor with this design can ensure the liquid (drinking water) never flows in from any end of the adaptor to contact the metal exposed at the end of pipe, so that it may avoid the fact that people's health may be threatened by the liquid (drinking water) after contacting with the metal at the end of pipe. In addition, the first O-shaped sealing ring 105 disposed circumferentially on the external wall of the adaptor, may not only ensure that the O-shaped sealing ring always contacts with the internal wall of pipe connector, even if there is a slight relative movement between the adaptor and the internal wall of pipe connector; but also increases the pressure on the internal wall of pipe connector, so as to increases the friction between the adaptor and such internal wall, thereby improve the tightness of the system.

The first groove 103 and the second groove 104 not only ensure no relative movement between the second O-shaped sealing ring 106 and the adaptor, so as to ensure the quality of sealing between the pipe and the adaptor, but also ensure no axially relative movement between the first O-shaped sealing ring 105 and the adaptor, so as to keep the first O-shaped sealing ring 105 always staying on the external wall of the adaptor, thereby ensuring the sealing between the adaptor and the internal wall of pipe connector.

### Example 2

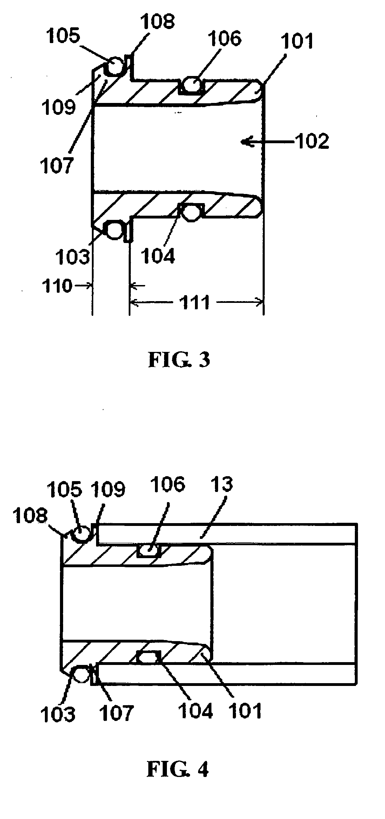

Referring to FIG.3, the adaptor comprises an adaptor body 101 with a axial passage 102 in it, which also comprises a socket connecting segment 110 for connecting with a pipe connector, and a pipe connecting segment 111 for connecting with a pipe; an adaptor flange 107 is circumferentially disposed on the external wall of the socket connecting segment 110.

A first O-shaped sealing ring 105 is disposed on the socket connecting segment 110 for forming a sealed connection with the internal wall of the pipe connector; a second O-shaped sealing ring 106 is disposed on the pipe connecting segment 111 for forming a sealed connection with the internal wall of the pipe.

A first positioning structure is circumferentially disposed on the external wall of the socket connecting segment 110 for positioning the first O-shaped sealing ring 105; a second positioning structure is circumferentially disposed on the external wall of the pipe connecting segment 111 for positioning the second O-shaped sealing ring 106.

Referring to FIG. 4, the first positioning structure is a first groove 103 that is circumferentially disposed on the adaptor flange 107, while the second positioning structure is a second groove 104 that is circumferentially disposed on the external wall of the adaptor body 101; the first O-shaped sealing ring 105 is disposed in the first groove 103, while the second O-shaped sealing ring 106 is disposed in the second groove 104.

The first groove 103 comprises a pipe connecting segment 111 side forming a first wall 108, and a socket connecting segment 110 side forming a second wall 109; the first wall 108 and the second wall 109 are annular, and the diameter of the first wall 108 is larger than that of the second wall 109; the first wall 108 works with the pipe connector to prevent the pipe from moving in the direction of entry.

### Example 3

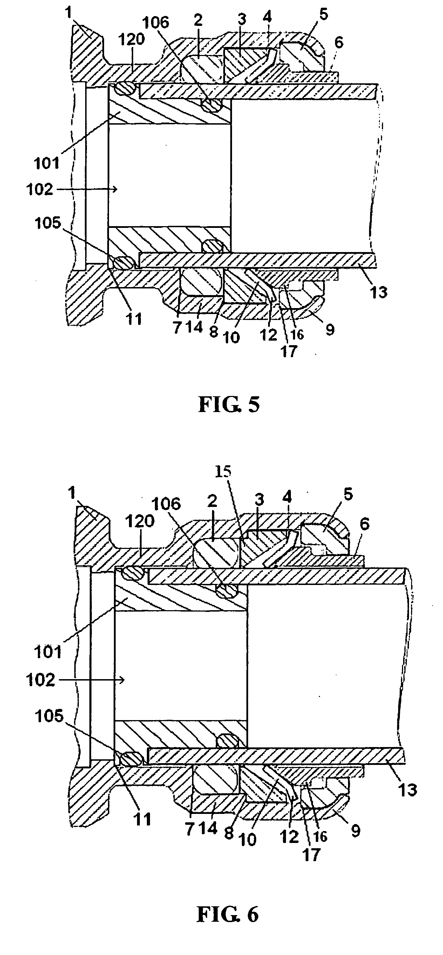

Referring to FIG. 5, a pipe connector comprises: a socket body 1. The socket body 1 comprises, in the direction of pipe entry: a locking cap 5 for preventing the components in the pipe connector from escaping , a locking cap stop member 9 disposed at the end of the pipe connector where the pipe 13 enters, for preventing the locking cap 5 from escaping; a demounting ring 6 for unlocking the pipe 13; a grab ring 4, comprising a flange 12 and a plurality of teeth 10 set on the flange for grabbing on the external wall of the pipe 13; a retainer 3, in moveable connection with the internal wall of the socket body 1, for stopping the grab ring 4 from moving in the direction of pipe entry; a retainer stop shoulder 8 disposed on the internal wall of the socket body 1 for stopping the retainer 3 from moving in the direction of pipe entry; the arrangement of the retainer stop shoulder 8 and the and locking cap 5 allows free axial movement of the grab ring 4 and the retainer 3 between them.

A third O-shaped sealing ring 2 for forming a sealed connection with the external wall of the pipe 13; a O-shaped sealing ring stop shoulder 7, disposed on the internal wall of the socket body 1, for stopping the third O-shaped sealing ring 2 from moving in the direction of pipe entry.

The socket body 1 further comprises a pipe connecting segment 120.

The pipe connector also comprises an adaptor; the adaptor, comprises an adaptor body 101 with a axial passage 102 in it, which also comprises a socket connecting segment 110 for connecting with a pipe connector, and a pipe connecting segment 111 for connecting with a pipe; an adaptor flange 107 is circumferentially disposed on the external wall of the socket connecting segment 110.

Referring to FIG.2, a first O-shaped sealing ring 105 is disposed on the socket connecting segment 110 for forming a sealed connection with the internal wall of the pipe connector; a second O-shaped sealing ring 106 is disposed on the pipe connecting segment 111 for forming a sealed connection with the internal wall of the pipe.

A first positioning structure is circumferentially disposed on the external wall of the socket connecting segment 110 for positioning the first O-shaped sealing ring 105; a second positioning structure is circumferentially disposed on the external wall of the pipe connecting segment 111 for positioning the second O-shaped sealing ring 106.

The first positioning structure is a first groove 103 that is circumferential ly disposed on the adaptor flange 107, while the second positioning structure is a second groove 104 that is circumferentially disposed on the external wall of the adaptor body 101; the first O-shaped sealing ring 105 is disposed in the first groove 103, while the second O-shaped sealing ring 106 is disposed in the second groove 104.

A pipe stop member **11** is disposed on the internal wall of the socket body 1, for stopping the adaptor and the pipe 13 from moving in the direction of pipe entry.

The length of adaptor is larger than the distance between the pipe stop member 11 and the third O-shaped sealing ring 2.

The gap between the O-shaped sealing ring stop shoulder 7 and the retainer 3 is wider than the axial width of the third O-shaped sealing ring 2 that is compressed when the pipe 13 enters the pipe connector and passes through the Third O-shaped sealing ring 2. It allows the free compression of the Third O-shaped sealing ring 2, and the Third O-shaped sealing ring 2 is separated from the retainer 3.

The internal diameter of the teeth 10 in their initial state is smaller than the external diameter of the pipe 13, the internal diameter of the third O-shaped sealing ring 2 is smaller than the external diameter of the pipe 13, and the internal diameter of the demounting ring 6 is larger than the external diameter of the pipe 13.

The retainer 3 is annular, and contains a ramp that coordinates with the teeth 10.

The pipe connector furthering comprises a locking cap shoulder 17, disposed on the internal wall of the socket body 1, between the grab ring 4 and the locking cap 5, for stopping the locking cap 5 from moving in the direction of pipe entry; a convex part 16, disposed on the external wall of the demounting ring for working with the locking cap 5 to avoid the demounting ring 6 of escaping from the pipe connector.

The demounting ring 6 contains a sharp angle at the end of the demount ring 6 close to the grab ring 4.

In the adaptor, a first O-shaped sealing ring 105 is disposed on the socket connecting segment for forming a sealed connection with the internal wall of the pipe sealing segment 120.

When pipe 13 enters the pipe connector, it initially passes through the demounting ring 6; then with the entry of the pipe 13, the external wall of the pipe 13 gets to contact the teeth 10 of the grab ring 4, and this stage the teeth of grab ring may grab on the external wall of pipe, with further entry of the pipe 13, it passes through the retainer 3 and the third O-shaped sealing ring 2, then reaches the adaptor flange 107.

In order to take the pipe 13 out of the pipe connector, the demounting ring 6 is pushed in the direction of pipe entry, and then the end of the demounting ring 6 close to the grab ring pushes the teeth to separate them from the external wall of the pipe 13, so that the pipe 13 is unlocked and can be taken out of the pipe connector.

The pipe 13 preferably can be multi-layer pipe.

The pipe connector with the adaptor in this example can ensure the liquid (drinking water) never flows in from any end of the adaptor to contact the metal exposed at the end of pipe, so that it may avoid the fact that people's health may be threatened by the liquid (drinking water) after contacting with the metal at the end of pipe. In addition, the first O-shaped sealing ring 105 disposed circumferentially on the external wall of the adaptor, may not only ensure that the O-shaped sealing ring always contacts with the internal wall of pipe connector, even if there is a slight relative movement between the adaptor and the internal wall of pipe connector; but also increases the pressure on the internal wall of pipe connector, so as to increases the friction between the adaptor and such internal wall, thereby improve the tightness of the system.

As the internal diameter of the teeth in their initial state is smaller than the external diameter of the pipe, the teeth of the grab ring can grab on the external wall of the pipe. As the internal diameter of the third O-shaped sealing ring is smaller than the external diameter of the pipe, the third O-shaped sealing ring can form a sealed connection with the external wall of the pipe, and as the internal diameter of the demounting ring is larger than the external diameter of the pipe, a sufficient clearance forms between the demounting ring and the pipe allowing an unrestricted entry of the pipe.

The retainer is annular, and contains a ramp that coordinates with the teeth. This allows the teeth of the grab ring to flex when pushed by the pipe being inserted.

The demounting ring containing a sharp angle at the end of the demount ring close to the O-shaped sealing ring ensures least contact with the teeth of the grab ring.

### Example 4

Referring to FIG. 6, a pipe connector comprises a socket body 1 in which in the direction of pipe entry, configuring in sequence a locking cap 5 for preventing the components such as demounting ring 6, grab ring 4, retainer 3 and third O-shaped sealing ring 2 in the pipe connector from escaping, a locking cap stop member 9 disposed at the end of the pipe connector where the pipe 13 enters, for preventing the locking cap 5 from escaping; a demounting ring 6 for unlocking the pipe 13; a grab ring 4, comprising a flange 12 and a plurality of teeth 10 disposed on the flange for grabbing on the external wall of the pipe 13; a retainer 3, in moveable connection with the internal wall of the socket body 1, for stopping the grab ring 4 from moving in the direction of pipe entry; a retainer stop shoulder 8 disposed on the internal wall of said socket body 1 for stopping said retainer 3 from moving in the direction of pipe entry; the arrangement of said retainer stop shoulder 8 and said and locking cap 5 allows free axial movement of said grab ring 4 and said retainer 3 between them; a third O-shaped sealing ring 2 for forming a sealed connection with the external wall of said pipe 13;

A O-shaped sealing ring stop shoulder 7, is disposed on the internal wall of the socket body 1, for stopping the third O-shaped sealing ring 2 from moving in the direction of pipe entry;

The socket body 1 further comprises a pipe connecting segment 120.

The pipe connector further comprises an adaptor, which comprises an adaptor body 101 with a axial passage 102 in it, which also comprises a socket connecting segment 110 for connecting with a pipe connector, and a pipe connecting segment 111 for connecting with a pipe; an adaptor flange 107 is circumferentially disposed on the external wall of the socket connecting segment 110.

A first O-shaped sealing ring 105 is disposed on the socket connecting segment 110 for forming a sealed connection with the internal wall of the pipe connector; a second O-shaped sealing ring 106 is disposed on the pipe connecting segment 111 for forming a sealed connection with the internal wall of the pipe.

A first positioning structure is circumferentially disposed on the external wall of the socket connecting segment 110 for positioning the first 0-shaped sealing ring 105; a second positioning structure is circumferentially disposed on the external wall of the pipe connecting segment 111 for positioning the second O-shaped sealing ring 106.

Referring to FIG. 4, the first positioning structure is a first groove 103 that is circumferentially disposed on the adaptor flange 107, while the second positioning structure is a second groove 104 that is circumferentially disposed on the external wall of the adaptor body 101; the first O-shaped sealing ring 105 is disposed in the first groove 103, while the second O-shaped sealing ring 106 is disposed in the second groove 104.

The first groove 103 comprises a pipe connecting segment 111 side forming a first wall 108, and a socket connecting segment 110 side forming a second wall 109; the first wall 108 and the second wall 109 are annular, and the diameter of the first wall 108 is larger than that of the second wall 109.

A pipe stop member 11 is disposed on the internal wall of the socket body 1, for stopping the adaptor and the pipe 13 from moving in the direction of pipe entry.

The length of adaptor is larger than the distance between the pipe stop member 11 and the third O-shaped sealing ring 2.

The pipe connector also comprising an O-shaped sealing ring location 14 disposed between the O-shaped sealing ring stop shoulder 7 and retainer stop shoulder 8, a step 15 which is in sealed connection with the O-shaped sealing ring location 14, is disposed at the end of the O-shaped sealing ring stop shoulder 7 close to the third O-shaped sealing ring 2; wherein, the step 15 always keeps in sealed connection with the O-shaped sealing ring location.

The gap between the O-shaped sealing ring stop shoulder 7 and the retainer 3 is wider than the axial width of the third O-shaped sealing ring 2 that is compressed when the pipe 13 enters the pipe connector and passes through the third O-shaped sealing ring 2.

As a preferred design that the gap between the O-shaped sealing ring stop shoulder 7 and the retainer 3 is as wide as the axial width of the third O-shaped sealing ring 2 that is compressed when the pipe 13 enters the pipe connector and passes through the third O-shaped sealing ring 2. It allows the free compression of the third O-shaped sealing ring 2.

The internal diameter of the teeth 10 in their initial state is smaller than the external diameter of the pipe 13, the internal diameter of the third O-shaped sealing ring 2 is smaller than the external diameter of the pipe 13, and the internal diameter of the demounting ring 6 is larger than the external diameter of the pipe 13.

The retainer 3 is annular, and contains a ramp that coordinates with the teeth 10.

The pipe connector furthering comprises a locking cap stop shoulder 17, disposed on the internal wall of the socket body 1, between the grab ring 4 and the locking cap 5, for stopping the locking cap 5 from moving in the direction of pipe entry; a convex part 16, disposed on the external wall of the demounting ring for working with the locking cap 5 to avoid the demounting ring 6 of escaping from the pipe connector.

The demounting ring 6 contains a sharp angle at the end of the demount ring 6 close to the O-shaped sealing ring 4.

When pipe 13 enters the pipe connector, it initially passes through the demounting ring 6; then with the entry of the pipe 13, the external wall of the pipe 13 gets to contact the teeth 10 of the grab ring 4. With further entry of the pipe 13, it passes through the retainer 3 and the third O-shaped sealing ring, then reaches the adaptor flange 107; at this moment, the first O-shaped sealing ring is in sealed connection with the internal wall of the pipe stop member, and the first wall 108 works with the pipe connector to prevent the pipe from moving in the direction of entry.

In order to take the pipe 13 out of the pipe connector, the demounting ring 6 is pushed in the direction of pipe entry, and then the end of the demounting ring 6 close to the grab ring pushes the teeth to separate them from the external wall of the pipe 13, so that the pipe 13 can be taken out of the pipe connector. The pipe 13 preferably can be multi-layer pipe.

The pipe connector with the adaptor in this example can ensure the liquid (drinking water) never flows in from any end of the adaptor to contact the metal exposed at the end of pipe, so that it may avoid the fact that people's health may be threatened by the liquid (drinking water) after contacting with the metal at the end of pipe. In addition, the first O-shaped sealing ring 105 disposed circumferentially on the external wall of the adaptor, may not only ensure that the third O-shaped sealing ring 2 always contacts with the internal wall of pipe connector, even if there is a slight relative movement between the adaptor and the internal wall of pipe connector; but also increases the pressure on the internal wall of pipe connector, so as to increases the friction between the adaptor and such internal wall, thereby improve the tightness of the system.

The pipe connector, wherein, comprises an O-shaped sealing ring location disposed between the O-shaped sealing ring stop shoulder and the retainer stop shoulder, a step which is in sealed connection with the O-shaped sealing ring location, is disposed at the end of the O-shaped sealing ring stop shoulder close to the third O-shaped sealing ring; wherein, the step keeps in sealed connection with the O-shaped sealing ring location. This design may improve the sealing between the third O-shaped sealing ring and the internal wall of pipe connector, so as to ensure the sealing of system

If the gap between the O-shaped sealing ring stop shoulder and the retainer is as wide as the axial width of the O-shaped sealing ring that is compressed when the pipe enters the pipe connector, the pressure generated by the third O-shaped sealing ring is not so large, and this may ease the insertion of pipe.

As the internal diameter of the teeth in their initial state is smaller than the external diameter of the pipe, the teeth of the grab ring can grab on the external wall of the pipe. As the internal diameter of the third O-shaped sealing ring is smaller than the external diameter of the pipe, the third O-shaped sealing ring can form a sealed connection with the external wall of the pipe, and as the internal diameter of the demounting ring is larger than the external diameter of the pipe, a sufficient clearance forms between the demounting ring and the pipe allowing an unrestricted entry of the pipe.

The retainer is annular, and contains a ramp that coordinates with the teeth. This allows the teeth of the grab ring to flex when pushed by the pipe being inserted.

The demounting ring containing a sharp angle at the end of the demount ring close to the third O-shaped sealing ring ensures least contact with the teeth of the grab ring.

## Claims

1. A pipe connector comprising:
a socket body (1) having pipe locking assembly for locking a pipe (13) inserted in the socket in the direction of pipe (13) entry;
a third O-shaped sealing ring (2) for forming a sealed connection with the external wall of said pipe (13);
an sealing ring stop shoulder (7);
a pipe sealing segment (120); and
an adaptor having an adaptor body (101), a socket connecting segment (110), a pipe connecting segment (111), a first O-shaped sealing ring (105), a second O-shaped sealing ring (106) and an axial passage (102) disposed in said adaptor body (101);
wherein
said sealing ring stop shoulder (7) is disposed on the internal wall of said socket body (1), for stopping said third O-shaped sealing ring (2) from moving in the direction of pipe (13) entry;
said first O-shaped sealing ring (105) is arranged disposed on said socket connecting segment (110) for forming a sealed connection with the internal wall of said socket; and
said second O-shaped sealing ring (106) is arranged disposed on said pipe connecting segment (111) for forming a sealed connection with the internal wall of said pipe (13);
wherein a first positioning structure is circumferentially disposed on the external wall of said socket connecting segment (110) for positioning said first O-shaped sealing ring (105); and a second positioning structure is circumferentially disposed on the external wall of said pipe connecting segment (111) for positioning said second O-shaped sealing ring (106);
wherein said first positioning structure is a first groove (103) that is circumferentially disposed, while said second positioning structure is a second groove (104) that is circumferentially disposed; and said first O-shaped sealing ring (105) is disposed in said first groove (103), while said second O-shaped sealing ring (106) is disposed in said second groove (104); and
wherein an adaptor flange (107) is circumferentially disposed on the external wall of said socket connecting segment (110), said first groove (103) is circumferentially disposed on said adaptor flange (107); and a pipe stop member (11) is disposed on the internal wall of said socket body (1), for stopping said adaptor from moving in the direction of pipe (13) entry; and
wherein said first groove (103) comprises a pipe connecting segment side forming a first wall (108), and a socket connecting segment side forming a second wall (109); said first wall (108) and said second wall (109) are annular, and the diameter of said first wall (108) is larger than that of said second wall (109); said pipe stop member (11) is a pipe stop member (11) with an annular shape that is circumferentially disposed;
**characterized in that** said sealing ring stop shoulder (7) is O-shaped and the internal diameter of said pipe stop member (11) is larger than that of said second wall (109), but smaller than that of said first wall (108); and
said first O-shaped sealing ring (105) is in sealed connection with the internal wall of said pipe stop member (11); said first wall (108) works with said pipe stop member (11) to prevent the pipe (13) from moving in the direction of entry.

2. The pipe connector of claim 1, wherein, said pipe locking assembly comprises
a locking cap (5) for preventing the components in said socket from escaping;
a locking cap stop member (9) disposed at the end of said socket body (1) where said pipe (13) enters, for preventing said locking cap (5) from escaping;
a demounting ring (6) for unlocking said pipe (13);
a grab ring (4), comprising a flange (12) and a plurality of teeth (10) arranged on said flange (12) and fixed to the external wall of said pipe (13);
a retainer (3), in moveable connection with the internal wall of said socket body (1), for stopping said grab ring (4) from moving in the direction of pipe (13) entry;
a retainer stop shoulder (8) disposed on the internal wall of said socket body (1) for stopping said retainer (3) from moving in the direction of pipe (13) entry.

3. The pipe connector of claim 2, wherein the socket body (1) comprises an O-shaped sealing ring location (14) and a step (15);
said O-shaped sealing ring location (14) is disposed between said O-shaped sealing ring stop shoulder (7) and retainer stop shoulder (8);
said step (15) is in sealed connection with said O-shaped sealing ring location (14);
said step (15) is disposed at the end of said O-shaped sealing ring stop shoulder (7);
said O-shaped sealing ring stop shoulder (7) is close to to said third O-shaped sealing ring (2); and
said step (15) always keeps in sealed connection with said O-shaped sealing ring location (14).

4. The pipe connector of claim 3, wherein said socket further comprises:
a locking cap stop shoulder (17), a convex part (16), and said demounting ring (6) having a sharp angle;
said locking cap stop shoulder (17) is disposed on the internal wall of said socket body (1), between said grab ring (4) and said locking cap (5), for stopping said locking cap (5) from moving in the direction of pipe (13) entry;
said convex part (16) is disposed on the external wall of said demounting ring (6) for working with said locking cap (5) to avoid said demounting ring (6) of escaping from said socket;
said sharp angle disposed at the end of said demounting ring (6) is close to said grab ring (4);
the gap between said O-shaped sealing ring stop shoulder (7) and said retainer (3) is no narrower than the axial width of said third O-shaped sealing ring (2) that is compressed when said pipe (13) passes through said third O-shaped sealing ring (2);
the internal diameter of said teeth (10) in their initial state is smaller than the external diameter of said pipe (13);
the internal diameter of said third O-shaped sealing ring (2) is smaller than the external diameter of said pipe (13);
the internal diameter of said demounting ring (6) is larger than the external diameter of said pipe (13);
said retainer (3) is annular; and
said taper having a ramp that coordinates with said teeth (10).

## Patentansprüche

1. Rohrverbinder, umfassend:
einen Stutzenkörper (1), welcher eine Rohrverriegelungsanordnung zum Verriegeln eines Rohres (13) aufweist, die in den Stutzen in Richtung der Rohr(13)-Einführung eingesetzt wird;
einen dritten O-förmigen Dichtungsring (2) zum Bilden einer abgedichteten Verbindung mit der Außenwand des Rohres (13);
eine Dichtungsring-Anschlagschulter (7);
ein Rohrdichtungsteilabschnitt (120); und
einen Adapter, welcher einen Adapterkörper (101) aufweist, einen stutzenverbindenden Teilabschnitt (110), einen rohrverbindenden Teilabschnitt (111), einen ersten O-förmigen Dichtungsring (105), einen zweiten O-förmigen Dichtungsring (106) und einen axialen Durchgang (102), welcher in dem Adapterkörper (101) angeordnet ist; wobei
die Dichtungsring-Anschlagschulter (7) an der Innenwand des Stutzenkörpers (1) angeordnet ist, um den dritten O-förmigen Dichtungsring (2) vom Bewegen in Richtung der Rohr(13)-Einführung abzuhalten;
der erste O-förmige Dichtungsring (105) am stutzenverbindenden Teilabschnitt (110) zum Bilden einer abgedichteten Verbindung mit der Innenwand des Stutzens angeordnet ist; und
der zweite O-förmige Dichtungsring (106) am rohrverbindenden Teilabschnitt (111) zum Bilden einer abgedichteten Verbindung mit der Innenwand des Rohres (13) angeordnet ist;
wobei eine erste Positionierstruktur umlaufend an der Außenwand des stutzenverbindenden Teilabschnitts (110) zum Positionieren des ersten O-förmigen Dichtungsrings (105) angeordnet ist; und eine zweite Positionierstruktur umlaufend an der Außenwand des rohrverbindenden Teilabschnitts (111) zum Positionieren des zweiten O-förmigen Dichtungsrings (106) angeordnet ist;
wobei die erste Positionierstruktur eine erste Nut (103) ist, welche umlaufend angeordnet ist, während die zweite Positionierstruktur eine zweite Nut (104) ist, welche umlaufend angeordnet ist; und der erste O-förmige Dichtungsring (105) in der ersten Nut (103) angeordnet ist, während der zweite O-förmige Dichtungsring (106) in der zweiten Nut (104) angeordnet ist; und
wobei ein Adapterflansch (107) umlaufend an der Außenwand des stutzenverbindenden Teilabschnitts (110) angeordnet ist, wobei die erste Nut (103) an dem Adapterflansch (107) umlaufend angeordnet ist; und ein Rohr-Anschlagelement (11) an der Innenwand des Stutzenkörpers (1) angeordnet ist, um den Adapter vom Bewegen in Richtung der Rohr(13)-Einführung abzuhalten; und
wobei die erste Nut (103) eine rohrverbindende Teilabschnittsseite, welche eine erste Wand (108) bildet, und eine stutzenverbindende Teilabschnittsseite umfasst, welche eine zweite Wand (109) bildet; wobei die erste Wand (108) und die zweite Wand (109) ringförmig sind, und der Durchmesser der ersten Wand (108) größer als der der zweiten Wand (109) ist; wobei das Rohr-Anschlagelement (11) ein Rohr-Anschlagelement (11) mit einer ringförmigen Form ist, welche umlaufend angeordnet ist;
**dadurch gekennzeichnet, dass** die Dichtungsring-Anschlagschulter (7) O-förmig ist und der Innendurchmesser des Rohr-Anschlagelements (11) größer als der der zweiten Wand (109), aber kleiner als der der ersten Wand (108) ist; und
der erste O-förmige Dichtungsring (105) in abdichtender Verbindung mit der Innenwand des Rohr-Anschlagelements (11) steht; wobei die erste Wand (108) mit dem Rohr-Anschlagelement (11) zusammenwirkt, um das Rohr (13) am Bewegen in Richtung der Einführung zu hindern.

2. Rohrverbinder nach Anspruch 1, wobei die Rohrverriegelungsanordnung umfasst:
eine Verriegelungskappe (5), um die Komponenten im Stutzen am Austreten zu hindern;
ein Verriegelungskappen-Anschlagelement (9), welches am Ende des Stutzenkörpers (1) angeordnet ist, an welchem das Rohr (13) eingeführt wird, um die Verriegelungskappe (5) am Austreten zu hindern;
ein Demontierring (6) zum Entriegeln des Rohres (13);
ein Greifring (4), umfassend einen Flansch (12) und eine Mehrzahl von Zähnen (10), welche am Flansch (12) angeordnet und an der Außenwand des Rohres (13) fixiert sind;
eine Halterung (3), welche in beweglicher Verbindung mit der Innenwand des Stutzenkörpers (1) steht, um den Greifring (4) vom Bewegen in Richtung der Rohr(13)-Einführung abzuhalten;
eine Halterungs-Anschlagschulter (8), welche an der Innenwand des Stutzenkörpers (1) angeordnet ist, um die Halterung (3) vom Bewegen in Richtung der Rohr(13)-Einführung abzuhalten.

3. Rohrverbinder nach Anspruch 2, wobei der Stutzenkörper eine O-förmige Dichtungsringstelle (14) und eine Stufe (15) umfasst;
wobei die O-förmige Dichtungsringstelle (14) zwischen der O-förmigen Dichtungsring-Anschlagschulter (7) und der Halterungs-Anschlagschulter (8) angeordnet ist;
wobei die Stufe (15) in abdichtender Verbindung mit der O-förmigen Dichtungsringstelle (14) steht;
wobei die Stufe (15) am Ende der O-förmigen Dichtungsring-Anschlagschulter (7) angeordnet ist;
wobei sich die O-förmige Dichtungsring-Anschlagschulter (7) dicht am dritten O-förmigen Dichtungsring (2) befindet; und
die Stufe (15) immer in dichtender Verbindung mit der O-förmigen Dichtungsringstelle (14) bleibt.

4. Rohrverbinder nach Anspruch 3, wobei der Stutzen weiter umfasst:
eine Verriegelungskappen-Anschlagschulter (17), einen konvexen Abschnitt (16), und den Demontierring (6), welcher einen steilen Winkel aufweist;
wobei die Verriegelungskappen-Anschlagschulter (17) an der Innenwand des Stutzenkörpers (1), zwischen dem Greifring (4) und der Verriegelungskappe (5), angeordnet ist, um die Verriegelungskappe (5) vom Bewegen in Richtung der Rohr(13)-Einführung abzuhalten;
wobei der konvexe Abschnitt (16) an der Außenwand des Demontierrings (6) zum Zusammenwirken mit der Verriegelungskappe (5) angeordnet ist, um zu vermeiden, dass der Demontierring (6) aus dem Stutzen austritt;
wobei sich der steile Winkel, welcher am Ende des Demontierrings (6) angeordnet ist, dicht am Greifring (4) befindet;
wobei die Lücke zwischen der O-förmigen Dichtungsring-Anschlagschulter (7) und der Halterung (3) nicht enger ist als die axiale Breite des dritten O-förmigen Dichtungsrings (2), welcher zusammengedrückt wird, wenn das Rohr (13) durch den dritten O-förmigen Dichtungsring (2) verläuft;
wobei der Innendurchmesser der Zähne (10) in ihrem Anfangszustand kleiner als der Außendurchmesser des Rohres (13) ist;
wobei der Innendurchmesser des dritten O-förmigen Dichtungsrings (2) kleiner als der Außendurchmesser des Rohres (13) ist;
wobei der Innendurchmesser des Demontierrings (6) größer als der Außendurchmesser des Rohres (13) ist;
wobei die Halterung (3) ringförmig ist; und
wobei der Kegel eine Rampe aufweist, welche mit den Zähnen (10) übereinstimmt.

## Revendications

1. Connecteur de tuyau comprenant :
un corps d'emboîtement (1) comportant un ensemble de blocage de tuyau destiné à bloquer un tuyau (13) inséré dans l'emboîtement dans la direction d'entrée du tuyau (13) ;
un troisième joint torique (2) d'étanchéité destiné à former une connexion étanche avec la paroi externe dudit tuyau (13) ;
un épaulement (7) de butée de joint d'étanchéité ;
un segment (120) d'étanchéité de tuyau ; et
un adaptateur comportant un corps (101) d'adaptateur, un segment (110) de connexion d'emboîtement, un segment (111) de connexion de tuyau, un premier joint torique (105) d'étanchéité, un deuxième joint torique (106) d'étanchéité et un passage (102) axial disposé dans ledit corps (101) d'adaptateur ;
dans lequel
ledit épaulement (7) de butée de joint d'étanchéité est disposé sur la paroi interne dudit corps d'emboîtement (1), pour empêcher ledit troisième joint torique (2) d'étanchéité de se déplacer dans la direction de l'entrée du tuyau (13) ;
ledit premier joint torique (105) d'étanchéité est agencé disposé sur ledit segment (110) de connexion d'emboîtement pour former une connexion étanche avec la paroi interne dudit emboîtement ; et
ledit deuxième joint torique (106) d'étanchéité est agencé disposé sur ledit segment (111) de connexion de tuyau pour former une connexion étanche avec la paroi interne dudit tuyau (13) ;
dans lequel une première structure de positionnement est disposée de manière circonférentielle sur la paroi externe dudit segment (110) de connexion d'emboîtement pour positionner ledit premier joint torique (105) d'étanchéité ; et une deuxième structure de positionnement est disposée de manière circonférentielle sur la paroi externe dudit segment (111) de connexion de tuyau pour positionner ledit deuxième joint torique (106) d'étanchéité ;
dans lequel ladite première structure de positionnement est une première rainure (103) qui est disposée de manière circonférentielle, alors que ladite deuxième structure de positionnement est une deuxième rainure (104) qui est disposée de manière circonférentielle ; et ledit premier joint torique (105) d'étanchéité est disposé dans ladite première rainure (103), alors que ledit deuxième joint torique (106) d'étanchéité est disposé dans ladite deuxième rainure (104) ; et
dans lequel une collerette (107) d'adaptateur est disposée de manière circonférentielle sur la paroi externe dudit segment (110) de connexion d'emboîtement, ladite première rainure (103) est disposée de manière circonférentielle sur le ladite collerette (107) d'adaptateur ; et un élément (11) de butée de tuyau est disposé sur la paroi interne dudit corps d'emboîtement (1), pour empêcher ledit adaptateur de se déplacer dans la direction de l'entrée du tuyau (13) ; et
dans lequel ladite première rainure (103) comprend un côté de segment de connexion de tuyau formant une première paroi (108), et un côté de segment de connexion d'emboîtement formant une deuxième paroi (109) ; ladite première paroi (108) et ladite deuxième paroi (109) sont annulaires, et le diamètre de ladite première paroi (108) est plus grand que celui de ladite deuxième paroi (109) ; ledit élément (11) de butée de tuyau est un élément (11) de butée de tuyau avec une forme annulaire qui est disposé de manière circonférentielle ; **caractérisé en ce que** ledit épaulement (7) de butée de joint d'étanchéité est en forme de O et le diamètre interne dudit élément (11) de butée de tuyau est plus grand que celui de ladite deuxième paroi (109), mais plus petit que celui de ladite première paroi (108) ; et
ledit premier joint torique (105) d'étanchéité est en connexion étanche avec la paroi interne dudit élément (11) de butée de tuyau ; ladite première paroi (108) fonctionne avec ledit élément (11) de butée de tuyau pour empêcher que le tuyau (13) se déplace dans la direction de l'entrée.

2. Connecteur de tuyau selon la revendication 1, dans lequel, ledit ensemble de blocage du tuyau comprend
une coiffe (5) de blocage destinée à empêcher que les composants dans ledit emboîtement ne s'échappent ;
un élément (9) de butée de coiffe de blocage disposé au niveau de l'extrémité dudit corps d'emboîtement (1) lorsque ledit tuyau (13) entre, pour empêcher le ladite coiffe (5) de blocage de s'échapper ;
une bague (6) de démontage destinée à débloquer ledit tuyau (13) ;
une bague (4) de préhension, comprenant une collerette (12) et une pluralité de dents (10) disposées sur ladite collerette (12) et fixée à la paroi externe dudit tuyau (13) ;
un dispositif (3) de retenue, en connexion mobile avec la paroi interne dudit corps d'emboîtement (1), pour empêcher le ladite bague (4) de préhension de se déplacer dans la direction de l'entrée du tuyau (13) ;
un épaulement (8) de butée de dispositif de retenue disposé sur la paroi interne dudit corps d'emboîtement (1) pour empêcher ledit dispositif (3) de retenue de se déplacer dans la direction de l'entrée du tuyau (13).

3. Connecteur de tuyau selon la revendication 2, dans lequel le corps d'emboîtement (1) comprend un emplacement (14) de joint torique d'étanchéité et une marche (15) ;
ledit emplacement (14) de joint torique d'étanchéité est disposé entre ledit épaulement (7) de butée de joint torique d'étanchéité et ledit épaulement (8) de butée de dispositif de retenue ;
ladite marche (15) est en connexion étanche avec ledit emplacement (14) de joint torique d'étanchéité ;
ladite marche (15) est disposée au niveau de l'extrémité dudit épaulement (7) de butée de joint torique d'étanchéité ;
ledit épaulement (7) de butée de joint torique d'étanchéité est proche de dudit joint torique (2) d'étanchéité ; et
ladite marche (15) conserve toujours une connexion étanche avec ledit emplacement (14) de joint torique d'étanchéité.

4. Connecteur de tuyau selon la revendication 3, dans lequel ledit emboîtement comprend en outre :
un épaulement (17) de butée de coiffe de blocage, une partie convexe (16), et ladite bague (6) de démontage comportant un angle aigu ;
ledit épaulement (17) de butée de coiffe de blocage est disposé sur la paroi interne dudit corps d'emboîtement (1), entre ladite bague (4) de préhension et ladite coiffe (5) de blocage, pour empêcher ladite coiffe (5) de blocage de se déplacer dans la direction de l'entrée du tuyau (13) ;
ladite partie convexe (16) est disposée sur la paroi externe de ladite bague (6) de démontage pour fonctionner avec ladite coiffe (5) de blocage pour éviter que ladite bague (6) de démontage s'échappe que dudit emboîtement ;
ledit angle aigu disposé au niveau de l'extrémité de ladite bague (6) de démontage est proche de ladite bague (4) de préhension ;
l'espace entre ledit épaulement (7) de butée de joint torique d'étanchéité et ledit dispositif (3) de retenue n'est pas plus étroit que la largeur axiale dudit troisième joint torique (2) d'étanchéité qui est compressé lorsque ledit tuyau (13) passe à travers ledit troisième joint torique (2) d'étanchéité ;
le diamètre interne desdites dents (10) dans leur état initial est plus petit que le diamètre externe dudit tuyau (13) ;
le diamètre interne dudit troisième joint torique (2) d'étanchéité est plus petit que le diamètre externe dudit tuyau (13) ;
le diamètre interne de ladite bague (6) de démontage est plus grand que le diamètre externe dudit tuyau (13) ;
ledit dispositif (3) de retenue est annulaire ; et
ladite conicité comportant une surface inclinée en coordination avec lesdites dents (10).
